# EUROPEAN PATENT SPECIFICATION

(11) **EP 2 604 713 B1**
(45) Date of publication and mention of the grant of the patent: **19.08.2015**
(21) Application number: 12196071.0
(22) Date of filing: 07.12.2012
(51) Int. Cl.: C22B 7/00, C22B 60/02, B01D 63/16, G21F 9/04

(54) **Method of obtaining and separating valuable metallic elements, specifically from low-grade uranium ores and radioactive liquid wastes**
Verfahren zum Erhalten und Trennen von wertvollen metallischen Elementen, speziell von minderwertigen Uranerzen und radioaktiven flüssigen Abfällen
Méthode d'obtention et de séparer les précieuses éléments métalliques, spécifiquement de minerai de faible teneur d'uranium et les déchets radioactifs liquides

(30) Priority: 13.12.2011 PL 39737911
(43) Date of publication of application: 19.06.2013
(73) Proprietor: Instytut Chemii i Techniki Jadrowej, 03-195 Warszawa (PL)
(72) Inventor: Zakrzewska-Trznadel, Grazyna, 01-651 Warszawa, (PL); Jaworska-Sobczak, Agnieszka, 03-426 Warszawa (PL); Miskiewicz, Agnieszka, 21-222 Podedwórze (PL); Lada, Wieslawa, 00-172 Warszawa (PL); Dluska, Ewa, 02-495 Warszawa, (PL); Wronski, M. Stanislaw, 04-404 Warszawa, (PL)
(74) Representative: Brodowska, Iwona

(56) References cited:
- PL-B1- 179 430
- PL-B1- 181 996
- US-B1- 6 258 333

## Description

### Technical Field

The object of the invention is a method of obtaining and separating valuable metallic elements, specifically from low-grade uranium ores and radioactive liquid wastes, consisting in combined use of sorbent, soluble polymer, and membrane contactor in a helical flow. Unexpectedly, the method increases the efficiency of both separation and extraction while it reduces the fouling of the membrane.

### Background Art

The population on the Earth keeps growing, which increases the industrialisation and consequently, the demand for various valuable metallic elements used in many industrial branches, including nuclear power engineering.

Evolution of this branch, applicable environmental impacts as well as natural resources depletion (coal, natural gas, crude oil, and uranium ore deposits) encourage many researchers to look for new resources of raw materials(Chmielewski, Andrzej, in Nukleonika 2011, 56 (3) 241, and in *Przyszlość energetyczna świata i Polski* [Power Engineering: Global and Polish Future], Nauka i Technika 2011, 4 (VII/VIII) 293). For instance, uranium or thorium may be acquired not only from currently available ores but also from ore processing wastes, seawater, and other low-grade resources, which seems advisable in the context of rapid development of nuclear power engineering (potential main supplier of energy in the future). Accordingly, environmental protection must accompany the works on acquisition of valuable raw materials for the industry. The management of any waste products, both solids and liquids originating from deposit processing and industrial processes, seems imperative in this context.

Prior art includes the membrane technique used for the purpose of increasing the efficiency of radioactive liquid waste purification; the method is described in the Patent No. PL179430 (2000) filed by ICHTJ: "Method of radioactive liquid waste purification", by Chmielewski, A. G.; Zakrzewska-Trznadel, G.; Harasimowicz, M., and Van Hook, W.A., as well as PL193649 (2006) "Method of increasing the efficiency of purification of low and medium activity liquid wastes concentrated by means of reverse osmosis technique" by Chmielewski, A. G.; Harasimowicz, M.; Tymiński, B., and Zakrzewska-Trznadel, G., where concentration of low and medium activity liquid wastes was produced by means of reverse osmosis.

Furthermore, prior art includes the method of conducting chemical processes between the gas or the liquid and the suspension, employing membrane contactors where two phases are separated by a hydrophobic membrane containing an internal rotating cylinder, which makes the liquid or suspension move by helical flow; the method is described in the Patent No. PL181996 (1997) filed by the Faculty of Chemical and Process Engineering at the Warsaw Technical University.

### Summary of invention

The method of obtaining and separating valuable metallic elements, specifically from low-grade uranium ores and radioactive liquid wastes, according to the present invention consisting in combined use of sorbent, soluble polymer, and the membrane contactor with helical flow, includes the liquid-solid suspension dispensed into the membrane contactor system with the helical flow whereas the solid is composed of a known sorbent, preferably activated carbon or complexing agent, preferably soluble polymer, specifically polyacrylic acid.

The method preferably consists in the use of activated carbon as a sorbent of concentration from c = 0.1 g/dcm³ through c = 0.8 g/dcm³ and of contactor with a helical flow whereas the rotor moves at a rate from 800 rpm through 1,200 rpm, which virtually eliminates the fouling phenomenon and keeps the retention factor R at the level of 60%.

The method preferably consists in the use of a soluble polymer, preferably polyacrylic acid, as a complexing agent, whereas the concentration of polyacrylic acid ranges from c = 0.2 g/dcm² through c = 0.2 g/dcm², the ratio cₘₑ / c_{polymer} = 1.4, and the rotor moves at a rate from 1,800 through 2,200 rpm, which virtually eliminates the fouling phenomenon and keeps the retention factor R at the level of 98%.

Compared with the methods used so far, the time necessary for binding metal ion equilibrium content was 6 times shorter in the case of the two options.

Preferably, the method as used herein will use the above mentioned membrane contactor with helical flow, specifically for separation and recovery of valuable metals from various types of media.

Preferably, the method as used herein will use the membrane contactor with helical flow, combined with a sorbent or a complexing agent, specifically for filtration of liquid-solid suspensions. This will reduce the volume of waste products and minimise the consumption of reacting substances and energy.

Unexpectedly and preferably, the method as used herein will feed a complexing agent, i.e. a polymer soluble in water, preferably polyacrylic acid, into the membrane apparatus with contactor, and use the helical flow for the purpose of reduction in the fouling phenomenon during the process of separation of polymer-bound ions.

Unexpectedly and preferably, the method as used herein will use a sorbent, preferably activated carbon, and helical flow for the purpose of reduction in the fouling phenomenon during the process of separation of ions adsorbed by the sorbent, on the membrane of helical flow contactor.

The quality of the method as used herein consists in the fact that the method employs the contactor with the membrane of the newest generation, which is resistant to aggressive impact of chemical medium. The apparatus as described above eliminates many deficiencies of conventional extraction method given that the process may be conducted at considerable differences in phase rates, which allows processing large volumes of liquid flows using small amounts of the extracting agent.

Among other qualities of membrane contactor with helical flow there are: large area of phase contact, which neither high nor low flow rate will disturb; increased conversion rate in chemical reactions thanks to continuous product removal and shift of equilibrium, as well as easy linear apparatus upscaling thanks to modular construction of the installation. Furthermore, addition of agents such as complexing compounds or dispersed sorbents in helical apparatus will make the membrane resistant to fouling (no down time for cleaning) and hence, process cycle time will be reduced, which has a positive impact on the economic balance.

Shown below are Examples I and II of the processes conducted in model systems, which simulate actual chemical compositions of e.g. radioactive waste liquids or process waters generated by the filtration unit downstream of the stage of uranium ore leaching; Example III demonstrates the process conducted with actual solution obtained downstream of the stage of uranium ore leaching.

### Description of embodiments

**Example** I. In order to produce a liquid-solid suspension, a sorbent, i.e. activated carbon of concentration from 0.1 g/dcm³ to 0.5 g/dcm³, preferably 0.3 g/dcm³, manufactured by Sigma Aldrich, was added to 5 litres of CoCl₂· 6H₂O manufactured by Sigma Aldrich, the concentration of cobalt ions ranging from 80 mg/dcm³ to 150 mg/dcm³, preferably 130 mg/dcm³; next, the medium was stirred using an IKA manufactured mechanical agitator for one hour at room temperature. The suspension was fed into the membrane system, preferably with the contactor with helical flow, by means of rotodynamic pump manufactured by Cole-Palmer.

Two process streams were obtained in the membrane apparatus: the retentate and the permeate.

In order to examine cobalt ion concentration in the retentate, samples were taken when the suspension was flowing through the system, and analysed by the DR- 2000 spectrophotometer manufactured by HACH. " Cobalt ion retention rate "R" was adopted as the measure of cobalt ion binding.

On the other hand, the impact of rotation rate of the rotor on R retention rate was determined by means of rotor rate control with the inverter.

It was stated that with retention coefficient R equal to 60%, use of activated carbon as a sorbent, concentration c = 0.3 g/dcm³, contactor with helical flow, and at rotor rate equal to 1,000 rpm, the fouling phenomenon would be virtually absent.

**Example II.** Soluble polymer, preferably polyacrylic acid of concentration from 0.1 g/dcm³ through 0.5 g/dcm³, preferably 0.2 g/dcm³, manufactured by Sigma Aldrich, cobalt ion proportion ranging from 1:1 to 1:6, preferably 1:4, was added to 5 litres of CoCl₂· 6H₂O manufactured by Sigma Aldrich, concentration of cobalt ions ranging from 80 mg/dcm³ to 120 mg/dcm³, preferably 102 mg/dcm³. This aqueous solution was fed into the membrane system, preferably with contactor with helical flow, by means of rotodynamic pump manufactured by Cole-Palmer.

Two process streams were obtained in the membrane apparatus: the retentate and the permeate.

In order to examine cobalt ion concentration in the retentate, samples were taken when the suspension was flowing through the system, and analysed by the DR- 2000 spectrophotometer by HACH.

Cobalt ion retention rate "R" was adopted as the measure of cobalt ion binding.

On the other hand, the impact of rotation rate of the rotor on R retention rate was determined by means of rotor rate control with the inverter.

It was stated that with retention coefficient R equal to 98%, use of activated carbon as a sorbent, concentration c = 0.2 g/dcm³, with proportion of C_{Co} / C_{polymer} = 1:4 at simultaneous use of contactor with helical flow, and rotor rate equal to 2,000 rpm, the fouling phenomenon would be virtually absent whereas the time of binding the equilibrium content of cobalt ions would be 6 times shorter than in conventional systems.

**Example III.** 30g of uranium ore samples (Polish deposits) were roasted at the temperature of 550 °C for 4 hours, leached with 240 ml of 10% H₂SO₄, and diluted up to 3,000ml; this ore suspension solution was mixed by means of mechanical agitator manufactured by IKA and fed to the membrane system with helical flow by means of rotodynamic pump manufactured by Cole-Palmer.

The suspension feed flow rate ranged from 1 I/min. to 5 I/min., preferably 2 l/min.; the trans-membrane pressure amounted to 0.3 through 0.8 bar, preferably 0.7 bar, whereas rotor rate ranged from 1,000 to 2,000 rpm, preferably 1,500 rpm. In such conditions, the feed separated into two flows: retentate flow, which contained uranium and accompanying ore origin metallic ions, as well as permeate flow containing insoluble matters (sediment). The experiment continued until the moment when the permeate achieved the clarity, which meant that all the foulants in the form of sediment were contained in the retentate. On the basis of results of chemical analysis obtained by means of DR2000 spectrophotometer manufactured by HACH, using arsenic II method and ICP-MS, which were conducted by sampling the permeate every 30 minutes, it was stated that when the rotor rate amounted to 1,500 rpt, trans-membrane pressure to 0.7 bar, and feed concentration to 10g/l, separation of uranium inclusive of other valuable metallic elements from insoluble foulants was almost absolute and amounted to 95%.

## Claims

1. Method of obtaining and separating valuable metallic elements from low-grade uranium ores and radioactive liquid wastes, **characterised by** the fact that a liquid-solid suspension is fed into the membrane system with the contactor with helical flow, where the solid is a known sorbent, preferably activated carbon or complexing agent, preferably soluble polymer, specifically polyacrylic acid.

2. Method according to claim 1, **characterised by the fact that activated carbon** is used as a sorbent, concentration of c = 0.1 g/dcm³ through c = 0.8 g/dcm³ in helical flow in the contactor at rotor rate of 800 rpm through 1,200 rpm, which means that the fouling phenomenon is virtually absent and the value of retention index R exceeds 60%.

3. Method according to claim 1, **characterised by the fact that soluble polymer, specifically polyacrylic acid,** is used as a complexing agent, concentration of c = 0.2 g/dcm² through c = 0.2 g/dcm², proportion cₘₑ/c_{polymer} = 1.4, and rotor rate of 1,800 rpm through 2,200 rpm, which means that the fouling phenomenon is virtually absent and the value of retention index R exceeds 80 %, achieving preferably more than 98%.

## Patentansprüche

1. Verfahren zur Gewinnung und Trennung von wertvollen Metallelemente von geringhaltig Uranerz und radioaktiver Flüssigabfälle, **gekennzeichnet durch** die Tatsache, dass eine Flüssig-Fest-Suspension mit dem Schütz mit schraubenförmige Strömung, wo der Feststoff ein bekannter in die Membran eingespeist Sorptionsmittel, vorzugsweise Aktivkohle oder Komplexbildner, vorzugsweise lösliches Polymer, insbesondere Polyacrylsäure.

2. Verfahren nach Anspruch 1, **dadurch gekennzeichnet, daß** Aktivkohle als Sorbens Konzentration von c = 0,1 g / dcm3 durch c = 0,8 g / dcm3 in schraubenförmige Strömung in dem Kontaktor zu Rotorgeschwindigkeit von 800 UpM durch 1.200 verwendet rpm, was bedeutet, dass die Verschmutzung Phänomen ist praktisch nicht vorhanden und der Wert der Retentionsindex R 60% übersteigt.

3. Verfahren nach Anspruch 1, **gekennzeichnet durch** die Tatsache, dass lösliches Polymer, insbesondere Polyacrylsäure wird als Komplexbildner verwendet wird, der Konzentration c = 0,2 g / DCM2 **durch** c = 0,2 g / DCM2, Proportion CME / cpolymer = 1,4, und Rotorgeschwindigkeit von 1800 Umdrehungen pro Minute über 2.200 Umdrehungen pro Minute, was bedeutet, dass die Verschmutzung Phänomen ist praktisch nicht vorhanden und der Wert der Retentionsindex R übertrifft 80%, vorzugsweise zu erzielen mehr als 98%.

## Revendications

1. Procédé d'obtention et la séparation des éléments métalliques de valeur à partir de minerais d'uranium à faible teneur et de déchets liquides radioactifs, **caractérisé par le fait qu'**une suspension liquide-solide est introduit dans le système de membranes avec le contacteur à écoulement hélicoïdal, où le solide est un connue sorbant, le carbone activé ou de préférence un agent complexant, de préférence un polymère soluble, en particulier l'acide polyacrylique.

2. Procédé selon la revendication 1, **caractérisé par le fait que** le charbon actif est utilisé comme adsorbant, de concentration c = 0,1 g / dcm3 par c = 0,8 g / dcm3 en écoulement hélicoïdal dans le contacteur à raison de 800 tours par minute du rotor à travers 1200 tours par minute, ce qui signifie que le phénomène d'encrassement est pratiquement absent et la valeur de l'indice de rétention R supérieur à 60%.

3. Procédé selon la revendication 1, **caractérisé par le fait que** le polymère soluble, de l'acide polyacrylique en particulier, est utilisé comme agent complexant, c = concentration de 0,2 g / dcm2 par c = 0,2 g / dcm2, proportion FMC / cpolymer = 1,4, et la vitesse de 1800 tours par minute par 2200 tours par minute, ce qui signifie que le phénomène d'encrassement est pratiquement absent et la valeur de l'indice de rétention R est supérieure à 80%, de préférence atteindre plus de 98% rotor.
